Europäisches Patentamt

European Patent Office

Office européen des brevets

(11) Publication number: **0 271 259**
**A1**

(12) **EUROPEAN PATENT APPLICATION**

(21) Application number: **87310435.0**

(22) Date of filing: **26.11.87**

(51) Int. Cl.⁴ **B62D 33/04**

(30) Priority: **06.12.86 GB 8629230**

(43) Date of publication of application:
**15.06.88 Bulletin 88/24**

(84) Designated Contracting States:
**DE ES FR GB IT**

(71) Applicant: **WILSON DOUBLE-DECK TRAILERS LIMITED**
**Culcavey**
**Hillsborough County Down, BT26 6JJ**
**Northern Ireland(GB)**

(72) Inventor: **Wilson Frederick George**
**49 Hillsborough Old Road**
**Lisburn, County Antrim- Northern Ireland(GB)**

(74) Representative: **Sorrell, Terence Gordon et al**
**Fitzpatricks 4 West Regent Street**
**Glasgow G2 1RS Scotland(GB)**

(54) **Improved road vehicle.**

(57) A road vehicle part including a load carrying rear portion (A) of the road vehicle having upper (11) and lower (10) vertically spaced load bearing horizontal levels of load carrying capacity, extending substantially along the whole length of the vehicle. Space (14, 15) is provided at the lower level at the foreward end thereof for the accommodation of a front wheel drive motive unit (16) including a driver's cab and steerable axle suspension therefor. A front wheel drive motive unit (16) in combination with a driver's cab and steerable axle suspension, may be provided suitable for non-detachable attachment to the foreward end of the road vehicle part.

Fig.1.

EP 0 271 259 A1

## IMPROVED ROAD VEHICLE

The invention relates to road vehicles for delivering produce, having increased floor space with an overall vehicle length.

It is well known in transport that a limiting factor on goods which can be carried out in a truck is the floor space rather than volume. When goods are stacked above a certain height then packaging can suffer damage and it becomes dangerous for personnel to load to the full available height e.g. nearly all goods are loaded one pallet high only, as to place one row on top of the outer can cause damage.

One object of this invention is to provide a truck with exceptionally large floor space for the carriage of light and heavy goods.

A further object of the invention is to provide a truck with the lower floor a short distance from ground level so that standing room is available on both floors whilst still keeping within the height of conventional vehicles.

According to one aspect of the invention there is provided a load carrying rear portion of a road vehicle which has a upper and lower vertically spaced load bearing horizontal levels of load carrying capacity, extending substantially along the whole length of the vehicle, space being provided at the lower level at the forward end thereof for the accommodation of a front wheel drive motive unit, a driver's cab and steerable axle suspension therefor.

According to a further aspect of the invention there is provided a front wheel drive motive unit in combination with a driver's cab and steerable axle suspension, suitable for non-detachable attachment to the forward end of a road vehicle.

According to yet a further aspect of the invention there is provided a road vehicle for carrying produce which has two vertically spaced load bearing horizontal levels of load carrying capacity, extending substantially along the whole length of the vehicle, and an I.C. engine located to provide front wheel drive to the vehicle.

Preferably the road vehicle has an upper level which extends completely along the length of the vehicle.

A vertical support member is provided intermediate the ends of a lower level and the upper level towards the foremost end of the vehicle and from that position the upper level is of increased strength such that support for the I.C. engine and a drive system is by longitudinal beams attached to the vertical support member at the lower end thereof the front end of the longitudinal beams being attached to vertical beams attached to the underside of the strengthened forward upper level.

It is preferable that the I.C. engine with a gearbox is connected to a driven steerable axle with suspension at the forward end of the vehicle to provide the motive unit for the vehicle.

Foregoing and further features of the invention may be more readily understood from the following description, by way of example, in respect of the accompanying drawing in which:-

Fig. 1 shows a side elevation of a road vehicle;

Fig. 2 shows a perspective view of the road vehicle of Fig. 1, and

Fig. 3 shows a side elevational view of an alternative road vehicle;

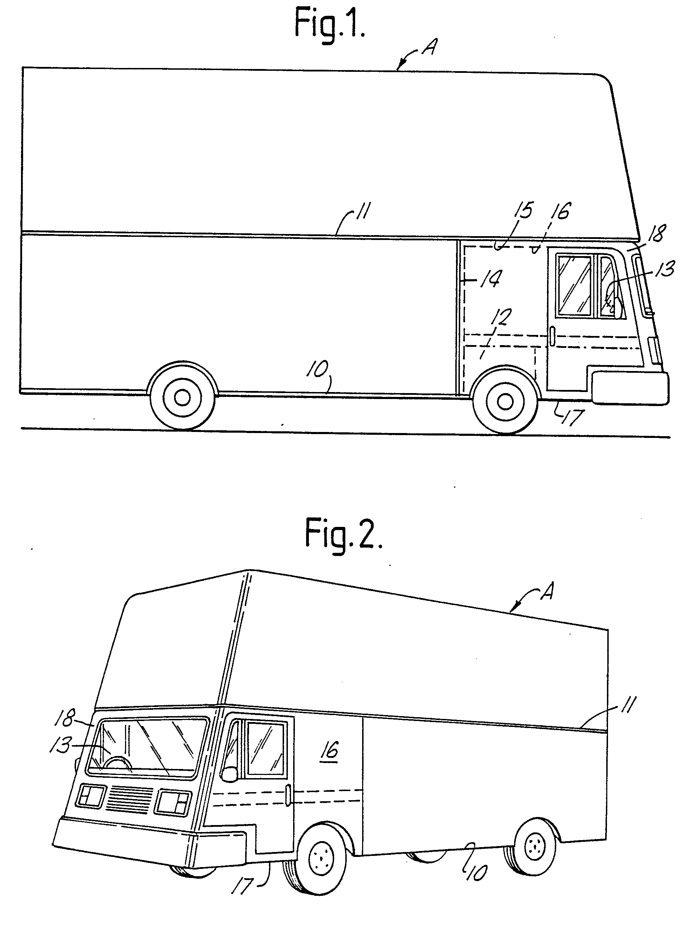

Referring now to Figs. 1 and 2 of the drawings there is shown a vehicle having load carrying rear portion A with a lower load bearing level 10 and an upper load bearing level 11, the upper load bearing level 11 extending substantially along the whole length of the vehicle.

An I.C. engine 12 is located forwardly of the vehicle and is connected to a front wheel drive (not shown) adjacent a driving position 13.

A vertical support member 14 is provided intermediate the ends of the lower level 10 and the upper level 11 towards the foremost end of the vehicle and from that position the upper level 11 at 15 is of increased strength such that support for the I.C. engine 12 and a drive system is longitudinal beams 17 attached to the vertical support member 14 at the lower end thereof, the front ends of the longitudinal beams 17 being attached to vertical beams 13 attached to the underside of the strengthened forward upper level 15.

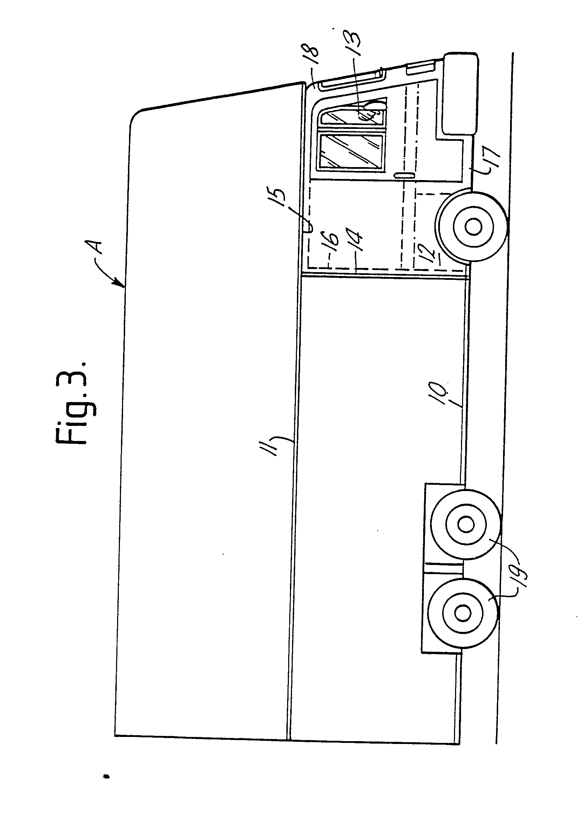

Fig. 3 shows an alternative embodiment in which two pairs of rear wheels 19 are provided.

In UK Patent Specification No. 2114941B there is disclosed a trailer for an articulated vehicle having an improved rear axle suspension to provide a lower floor level and this arrangement could be utilised in the present vehicle in either of the embodiments. The engine mounting and cab mould could be attached to the foremost end of such a trailer to provide a vehicle according to the present invention. The dashed portion 16 (Fig. 1) could provide the front wheel drive motive unit, cab and steerable axle as a separate assembly.

Access to the upper and lower floors may be a rear mounted conventional tail-lift.

## Claims

1. A road vehicle part characterised by a load carrying rear portion (A) of the road vehicle having upper (11) and lower (10) vertically spaced load bearing horizontal levels of load carrying capacity, extending substantially along the whole length of the vehicle, space (14, 15) being provided at the lower. level at the foreward end thereof for the accommodation of a front wheel drive motive unit (16), including a driver's cab and steerable axle suspension therefor.

2. A road vehicle part characterised by a front wheel drive motive unit (16) in combination with a driver's cab and steerable axle suspension, suitable for non-detachable attachment to the foreward end of a road vehicle part as claimed in claim 1.

3. A road vehicle for carrying produce characterised by two vertically spaced load bearing horizontal levels (10, 11) of load carrying capacity, extending substantially along the whole length of the vehicle, and an I.C. engine (12) located to provide front wheel drive to the vehicle.

4. A road vehicle as claimed in claim 3 characterised by a horizontal upper level (11) which extends completely along the length of the vehicle.

5. A road vehicle characterised by a combination of the vehicle parts as claimed in claim 1 and 2.

6. A road vehicle part as claimed in claim 1 characterised by a vertical support member (14) provided intermediate the ends of the lower level (10) and the upper level (11) towards the foremost end of the vehicle part and from that position the upper level (15) is of increased strength such that support for the I.C. engine (12) and a drive system is by longitudinal beams being attached to vertical beams (18) attached to the underside of the strengthened forward upper level (15).

## Fig.1.

## Fig.2.

# Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| Y | GB-A-2 090 798 (ITM ENTERPRISES) * figure 1 * | 1 | B 62 D 33/04 |
| A | | 3,4 | |
| | --- | | |
| Y | EP-A-0 001 973 (WARNEKE) * figures 1-4 * | 1 | |
| | --- | | |
| A | US-A-3 873 120 (LECOMTE et al.) * figure 1 * | 2 | |
| | --- | | |
| A | WO-A-8 302 594 (WILSON) | | |
| | --- | | |
| A | DE-A-3 020 977 (MÜLLER) | | |
| | ----- | | |

TECHNICAL FIELDS
SEARCHED (Int. Cl.3)

B 62 D 33/00

The present search report has been drawn up for all claims

| Place of search | Date of completion of the search | Examiner |
|---|---|---|
| BERLIN | 22-02-1988 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................
& : member of the same patent family, corresponding document

EPO FORM 1503 03.82 (P0401)